# FASCICULE DE BREVET EUROPEEN

(11) **EP 3 027 487 B1**
(45) Date de publication et mention de la délivrance du brevet: **22.05.2019**
(21) Numéro de dépôt: 14738553.8
(22) Date de dépôt: 11.06.2014
(51) Int. Cl.: B62D 21/15, B60R 19/26

(54) **DISPOSITIF D'ABSORPTION DE CHOCS POUR VEHICULE AUTOMOBILE**
STOSSDÄMPFENDER VORRICHTUNG FÜR KRAFTFAHRZEUG
SHOCK ABSORBING DEVICE FOR A MOTOR VEHICLE

(30) Priorité: 31.07.2013 FR 1357559
(43) Date de publication de la demande: 08.06.2016
(73) Titulaire: PSA Automobiles SA, 78300 Poissy (FR)
(72) Inventeur: PERU, Marc, F-92290 Chatenay-Malabry (FR)
(86) Numéro de dépôt international: PCT/FR2014/051411
(87) Numéro de publication internationale: WO 2015/015067

(56) Documents cités:
- EP-A1- 2 415 643
- EP-A2- 2 540 575
- FR-A1- 2 855 805
- US-A- 5 429 388
- US-A1- 2006 066 116
- US-A1- 2006 186 680
- US-A1- 2010 078 949
- US-B1- 6 988 753

## Description

### DISPOSITIF D'ABSORPTION DE CHOCS POUR VEHICULE AUTOMOBILE

L'invention a trait à l'absorption de chocs à l'avant d'un véhicule automobile. Plus particulièrement, l'invention a trait à un véhicule équipé d'un dispositif d'absorption de chocs pour l'avant dudit véhicule. Un système ou dispositif d'absorption de chocs avant pour véhicule est classiquement constitué d'une poutre transversale fixée à deux profilés déformables en compression et couramment appelés « crashboxes ». Ces profilés déformables peuvent comprendre, chacun, une platine de fixation à la tête de brancard de la structure du véhicule. Les brancards sont les deux profilés structurels s'étendant parallèlement l'un à l'autre le long de la structure du véhicule. Les profilés déformables ou « crashboxes » sont conçus pour pouvoir se déformer en formant des plis à la manière d'un accordéon. Ce type de déformation est également couramment désigné « bottelage » dans la mesure où les profilés prennent une forme annelée après déformation qui ressemble à des bottes de foin liées.

Un dispositif d'absorption de chocs avant pour véhicule doit satisfaire à de nombreuses prestations, notamment des tests de choc frontal.

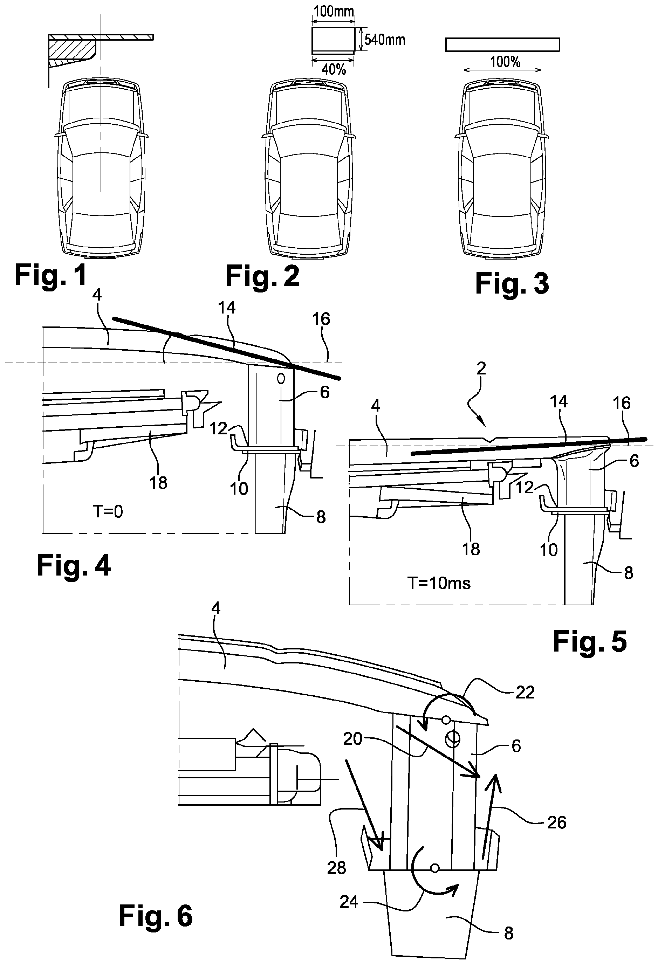

Parmi ces tests, on compte un test de choc frontal du type urbain à 16 km/h avec 40% de recouvrement contre un butoir rigide incliné à 10°. Ce test est illustré à la figure 1. L'objectif de ce test est que le dispositif d'absorption de chocs avant puisse absorber toute l'énergie du choc et éviter d'endommager le reste du véhicule comme les têtes de brancards et le matériel de refroidissement. Le véhicule peut alors être réparé à un coût limité. Ce test dit « réparabilité » est effectué aussi bien du côté gauche que du côté droit.

On compte également un test de choc. La barrière est composée d'une structure complexe qui représente la déformation « théorique » d'un bloc avant de voiture. Elle se compose notamment de panneaux en nid d'abeille. Le protocole est celui qui est utilisé actuellement par l'organisme European New Car Assessment Program (Euro NCAP). Ce test est à satisfaire aussi bien du côté gauche que du côté droit.

Un nouveau protocole de choc frontal à 50 km/h et 56 km/h avec 100% de recouvrement contre un mur rigide est en préparation. Il est susceptible d'être introduit dans le protocole Euro NCAP d'ici 2015.

Il est donc souhaitable de satisfaire avec une bonne notation à ces deux protocoles de choc frontaux à haute vitesse tout en satisfaisant au protocole de choc réparabilité. A l'occasion du choc à grande vitesse et décalé à 40%, un seul côté du véhicule heurte l'obstacle et l'obstacle est par ailleurs déformable. Le fait de devoir absorber toute l'énergie du choc sur le seul côté impacté accentue le risque d'intrusions à l'intérieur de l'habitacle de ce côté ; en revanche, la déformation de la barrière filtre la décélération subie par le véhicule, que l'on peut traiter avec les moyens de retenue des occupants selon l'état de la technique.

A l'occasion d'un choc à grande vitesse, sans décalage, sur un mur rigide, les deux côtés du véhicule travaillent de manière simultanée. L'énergie du choc est plus rapidement absorbée du fait de la raideur double représentée par les deux côtés du véhicule. De plus, l'impact est contre un mur rigide. La décélération subie par le véhicule est donc plus importante. La difficulté avec ce protocole se concentre essentiellement sur la loi de décélération du véhicule.

Le document de brevet publié FR 2 855 805 A1 divulgue un élément de structure de véhicule du type poutre (brancard) muni d'altérations locales conçues pour que la poutre se déforme suivant une loi prédéterminée en cas de choc frontal du véhicule. La loi de déformation comprend une phase d'absorption d'énergie suivie d'une phase d'effacement.

Le document de brevet publié US 3,822,907 divulgue également un élément de structure de véhicule du type poutre (brancard) conçu pour se déformer avec une phase initiale d'absorption d'énergie suivie d'une phase d'effacement.

Le document de brevet publié US 2010 0078949, montrant le préambule de la revendication 1, divulgue également un élément de structure de véhicule du type poutre (brancard) qui comporte des moyens de déformation contrôlée disposés sur la poutre transversale et configurés pour agir sur au moins un des profilés déformables lors d'une déformation en redressement de ladite poutre, de manière à exercer un couple de flexion sur le ou les profilés structurels, avec une section transversale horizontale en forme de coin.

Ces trois enseignements ne permettent cependant pas de réagir de manière différenciée en fonction du recouvrement entre la face avant du véhicule et l'obstacle. L'invention a pour objectif de proposer un dispositif d'absorption de chocs avant pour véhicule qui puisse satisfaire aux trois tests sus mentionnés, plus particulièrement au test de choc frontal à grande vitesse avec recouvrement de 40% sur un obstacle déformable et au test de choc frontal à grande vitesse avec recouvrement total sur obstacle rigide.

L'invention a pour objet un véhicule automobile qui comprend une structure avec deux profilés structurels qui s'étendent longitudinalement généralement parallèlement l'un à l'autre et un dispositif d'absorption de chocs conformément à l'objet de la revendication 1.

L'extrémité libre du bras peut présenter une forme inclinée ou arrondie, apte à glisser le long de la platine de fixation du profilé déformable correspondant lors d'une déformation en compression du profilé déformable correspondant sans déformation en redressement de ladite poutre. La platine de fixation peut comprendre un gousset s'étendant essentiellement verticalement parallèlement à la face latérale correspondante du profilé déformable. Ce gousset peut présenter une découpe à hauteur du bras de manière à lui permettre de se rapprocher du profilé déformable lors de la déformation en redressement de la poutre transversale.

Les profilés structurels sont préférentiellement les brancards du véhicule. L'amplitude du galbe de la poutre transversale peut être comprise entre 50 et 200mm. Elle est préférentiellement supérieure à 50mm, plus préférentiellement supérieure à 100mm. Selon un mode avantageux de l'invention, les moyens de déformation contrôlée sont rapportés sur la face arrière, la face supérieure et/ou la face inférieure de la poutre transversale, préférentiellement par vissage et/ou soudage.

Selon un mode avantageux de l'invention, les moyens de déformation contrôlée sont situés au niveau de la jonction entre la poutre transversale et le ou les profilés déformables.

Les mesures de l'invention sont intéressantes en ce qu'elles permettent de provoquer la flexion d'au moins un des brancards en vue de son effacement exclusivement lors d'un choc avec 100% de recouvrement. Lors d'un choc frontal à 64 km/h, avec 40% de recouvrement contre une barrière déformable du type Euro NCAP, la poutre transversale ne va pas se redresser comme dans le choc avec 100% de recouvrement et ne va par conséquent pas provoquer la flexion ou le rotulage du brancard correspondant. Les mesures de l'invention permettent par conséquent d'affaiblir de manière sélective la structure d'un véhicule en vue d'augmenter sa sécurité passive, et ce de manière simple et peu coûteuse.

D'autres caractéristiques et avantages de la présente invention seront mieux compris à l'aide de la description et des dessins parmi lesquels :
- La figure 1 illustre les conditions de test dit réparabilité, c'est-à-dire du type urbain à 16 km/h avec 40% de recouvrement contre un butoir rigide incliné à 10° ;
- La figure 2 illustre les conditions de test de choc frontal à 64 km/h, avec 40% de recouvrement contre une barrière déformable ;
- La figure 3 illustre les conditions de test de choc frontal à 50 km/h et 56 km/h avec 100% de recouvrement contre un mur rigide ;
- La figure 4 illustre un dispositif d'absorption de chocs avant pour véhicule selon l'état de la technique, à un temps T=0 d'un choc avec un obstacle (non représenté) ;
- La figure 5 correspond à la figure 4, à un temps T=10ms après le début de l'impact ;
- La figure 6 est une représentation de la partie de droite d'un dispositif d'absorption de chocs avant pour véhicule et illustre les différents efforts qu'il est, selon l'invention, désirable d'appliquer sur le brancard en cas de choc frontal avec 100% de recouvrement ;
- La figure 7 illustre la partie de droite d'un dispositif d'absorption de chocs avant pour véhicule selon un premier mode de réalisation exemplaire;
- La figure 8 est une variante de la figure 7 et correspond à un deuxième mode de réalisation exemplaire ;
- La figure 9 illustre la partie de droite d'un dispositif d'absorption de chocs avant pour véhicule selon un troisième mode de réalisation exemplaire ;
- La figure 10 est une variante de la figure 9 et correspond à un quatrième premier mode de réalisation exemplaire ;
- La figure 11 illustre une simulation de déformation à un premier stade de la partie avant de la structure d'un véhicule équipé d'un dispositif d'absorption de choc selon la figure 9 et correspondant au troisième mode de réalisation exemplaire ;
- La figure 12 correspond à la figure 11 à un deuxième stade de déformation ;
- La figure 13 correspond aux figures 10 et 11 à un troisième stade de déformation ;
- La figure 14 illustre la partie de droite d'un dispositif d'absorption de chocs selon un cinquième mode de réalisation de l'invention, le dispositif étant illustré avant déformation ;
- La figure 15 illustre le dispositif d'absorption de la figure 14, à un premier stade de déformation ;
- La figure 16 illustre le dispositif d'absorption des figures 14 et 15, à un deuxième stade de déformation ;
- La figure 17 est une illustration d'un exemple de réalisation du bras de déformation contrôlée du dispositif des figures 14 à 16.

Les figures 1 à 3 ont déjà été décrites précédemment dans le cadre de la discussion de l'art antérieur.

Les figures 4 et 5 illustrent la moitié droite d'un dispositif d'absorption de choc 2 pour véhicule, selon l'état de la technique, la figure 4 illustrant le dispositif avant déformation et la figure 5 illustrant la déformation du dispositif après un impact contre un mur avec un recouvrement à 100%. On peut observer à la figure 4 la forme galbée de la poutre transversale 4 qui est fixée, à chacune de ses extrémités, à un profilé déformable 6. Le profilé déformable 6 comprend une bride de fixation 12 coopérant avec une bride correspondante 10 à l'extrémité du brancard 8 correspondant. Le profilé déformable 6 est préférentiellement en aluminium et est conçu pour pouvoir se déformer par formation de plis successifs à l'occasion d'un effort de compression. La figure 4 illustre la forme galbée de la poutre par le trait 14 correspondant à sa direction principale au niveau de sa jonction avec le profilé déformable, cette direction formant un angle avec la direction transversale 16 passant par les jonctions de la poutre 4 avec les profilés déformables 6. La figure 5 illustre le dispositif d'absorption après impact sur un mur avec 100% de recouvrement. On peut observer la déformation en redressement ou dégalbage de la poutre transversale, le trait 14 qui correspond à la direction principale de la poutre, à son extrémité, étant proche de la direction transversale 16. Compte tenu de la capacité du profilé 6 à se déformer, le redressement de la poutre transversale au niveau de sa jonction avec le profilé déformable 6 a pour effet de déformer localement ledit profilé sans déformer le brancard 8.

Sur base de cette constatation, la figure 6 illustre les différents efforts qu'il est souhaitable d'exercer selon l'invention sur le profilé déformable et sur le brancard. L'objectif de ces efforts est de déformer le brancard 8 en vue de son effacement progressif. Il peut en effet être souhaitable d'exercer un effort oblique 20 sur la tête du profilé déformable 6. Un tel effort est susceptible d'être transmis au brancard 8 et à le déformer en flexion vers l'extérieur. Il peut également être souhaitable d'exercer un couple de flexion 22 sur la tête dudit profilé 6. Un tel couple 22 pourra alors être transmis au brancard, le couple transmis 24 permettant alors une déformation en flexion du brancard et, partant, la diminution de sa résistance dans l'amortissement du choc. Il peut également être souhaitable d'exercer un effort de compression longitudinal désaxé 28 et/ou un effort de traction longitudinale désaxé 26 sur la tête de brancard 8. De tels efforts sont en effet aptes à résulter en un couple de flexion 24 sur la tête de brancard 8 et, partant, sa déformation en flexion en vue de son effacement lors de l'impact sur un mur avec 100% de recouvrement.

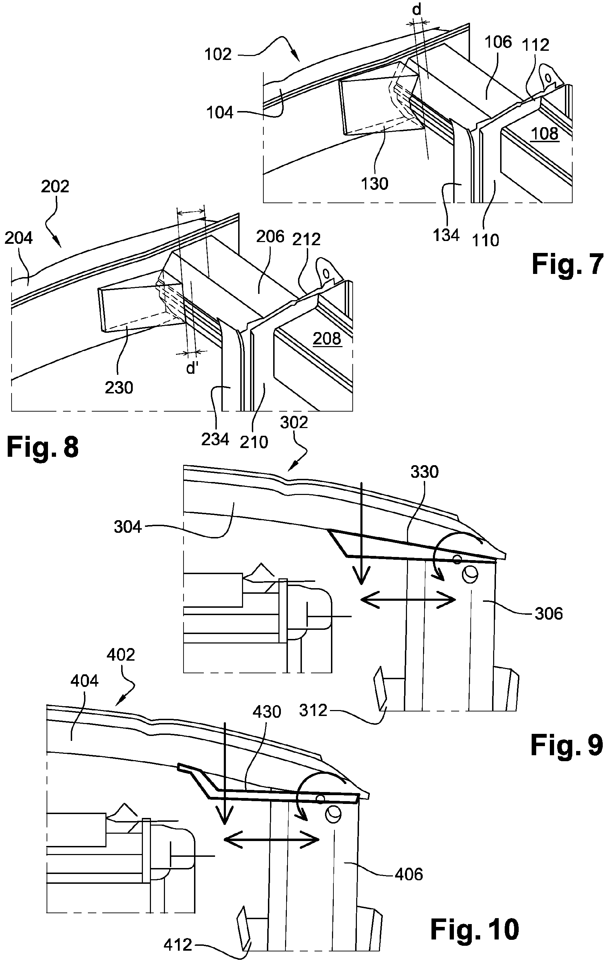

La figure 7 illustre un dispositif d'absorption de choc selon un premier mode de réalisation exemplaire. Le dispositif 102 comprend une poutre transversale galbée 104 et un profilé déformable 106 à chacune des ses deux extrémités. Chacun des profilés déformables 106 comprend une bride 112 destinée à coopérer avec une bride correspondante 110 sur la tête de brancard 108. Des moyens de déformation contrôlée 130 sont disposés sur la face arrière de la poutre transversale 104, à proximité de la jonction de ladite poutre avec le profilé déformable 106. Ces moyens de déformation contrôlée 130 forment une cale destinée à venir en appui sur la paroi intérieure du profilé lors d'un impact contre un mur avec 100% de recouvrement, c'est-à-dire un impact où la poutre transversale 104 va se déformer en se redressant. En effet, dans une telle déformation, la cale 130 va venir en appui sur la face latérale intérieure du profilé 106 et va exercer un effort oblique sur le profilé 106. Cet effort correspond à l'effort 20 représenté à la figure 6. Il va générer un couple de flexion dans le profilé 106 et dans le brancard.

A la figure 7 on peut observer que la cale 130 présente une face de contact avec le profilé qui épouse la section généralement hexagonale du profilé 106. Une distance de sécurité *d* peut être prévue entre la face d'appui de la cale et la paroi correspondante du profilé 106. L'objectif d'une telle distance est de s'assurer que des déformations de la poutre transversale tendant à légèrement la redresser, éventuellement dans le cas d'un choc frontal du type urbain à 16 km/h avec 40% de recouvrement contre un butoir rigide incliné à 10°, ne fasse pas fléchir le brancard. La distance de sécurité *d* peut être comprise entre 5 et 10mm.

La cale 130 de la figure 7 peut être en matériau plein, tel qu'une résine plastique. Alternativement, elle peut également être creuse en matériau métallique tel que de l'aluminium.

On peut observer à la figure 7 que la cale 130 peut être rapportée sur la face arrière de la poutre transversale 104. Pour ce faire, la cale 130 peut comprendre des pions aptes à coopérer par insertion avec des orifices correspondant sur ladite face arrière. D'autres moyens de fixation, tels que par exemple par vissage, collage et/ou soudage sont bien sûr envisageables. Il est intéressant de noter que cette cale 130 présente l'avantage de pouvoir être aisément montée en après-vente.

On peut également observer à la figure 7 que la bride 112 du profilé déformable 106 comporte un gousset 134 sur son bord intérieur. Ce gousset 134 pourra être découpé, en fonction de la taille de la cale et de la géométrie du dispositif, afin de ménager un passage pour la cale en fin de course de déformation en choc réparabilité.

La figure 8 illustre une variante du dispositif de la figure 7, correspondant ainsi à un deuxième mode de réalisation exemplaire. Les numéros de référence du premier mode sont utilisés dans le deuxième mode pour les éléments identiques ou similaires, ces numéros étant toutefois majorés de 100 afin de bien distinguer les deux modes de réalisation. Similairement au premier mode de réalisation, la cale 230 de ce deuxième mode est conçue pour générer un effort oblique tel qu'illustré à la figure 6. Cette cale 230 est toutefois de conception simplifiée dans la mesure où sa face de contact n'épouse plus le profil de la paroi latérale intérieure du profilé 106. La face de contact de la cale 230 est généralement plane et est destinée à entrer en contact avec la partie correspondante de la paroi latérale intérieure du profilé. Similairement au premier mode de réalisation, une distance de sécurité *d'* peut être prévue entre ladite face de contact et ladite paroi. Similairement au premier mode de réalisation, elle peut être comprise entre 5 et 10mm. Toutes les caractéristiques du premier mode de réalisation s'appliquent également au deuxième, pour autant qu'elles soient techniquement compatibles.

Les figures 9 et 10 illustrent des dispositifs d'absorption de choc selon un troisième et un quatrième mode de réalisation. Ces deux modes de réalisation sont configurés pour appliquer un couple de flexion à la tête du profilé déformable, ce couple se voyant alors transmis à la tête de brancard. A cet effet, il est fait référence à la figure 6 et aux couples 22 et 24.

Les numéros de référence du premier mode sont utilisés dans ces troisième et quatrième modes pour les éléments identiques ou similaires, ces numéros étant toutefois majorés de 200 et de 300, respectivement, afin de bien distinguer les deux modes de réalisation.

La figure 9 correspond au troisième mode de réalisation exemplaire, les moyens de déformation contrôlée forment une entretoise rigide 330 disposée entre la poutre transversale 304 et le profilé déformable 306. Elle s'étend latéralement depuis la jonction entre la poutre et le profilé, vers l'intérieur jusqu'à distance de ladite jonction. Elle constitue ainsi un levier d'une certaine rigidité, apte à appliquer à la tête de profilé 306 un couple de flexion qui se verra transmis à la tête de brancard. L'entretoise 330 est préférentiellement réalisée en matériau métallique, comme par exemple de l'aluminium. Elle est préférentiellement réalisée sous forme d'élément massif ou d'élément creux.

La figure 10 illustre une alternative à la figure 9, où l'entretoise est remplacée par un barreau 430 s'étendant, similairement à l'entretoise 330, latéralement depuis la jonction entre la poutre et le profilé, vers l'intérieur jusqu'à distance de ladite jonction. Le profilé 430 est toutefois fixé sur la face supérieure ou inférieure de la poutre. Au niveau de la jonction entre la poutre et le profilé déformable, le barreau peut également être fixé au profilé déformable. Il est préférentiellement en matériau métallique tel que de l'aluminium et fixé à la poutre et éventuellement au profilé par soudure. Il peut présenter une forme coudée, telle qu'illustrée à la figure, de manière à compenser l'inclinaison de la poutre par rapport à la direction transversale. Il peut s'agir d'un profilé creux tel qu'un tube ou encore d'un barreau plein.

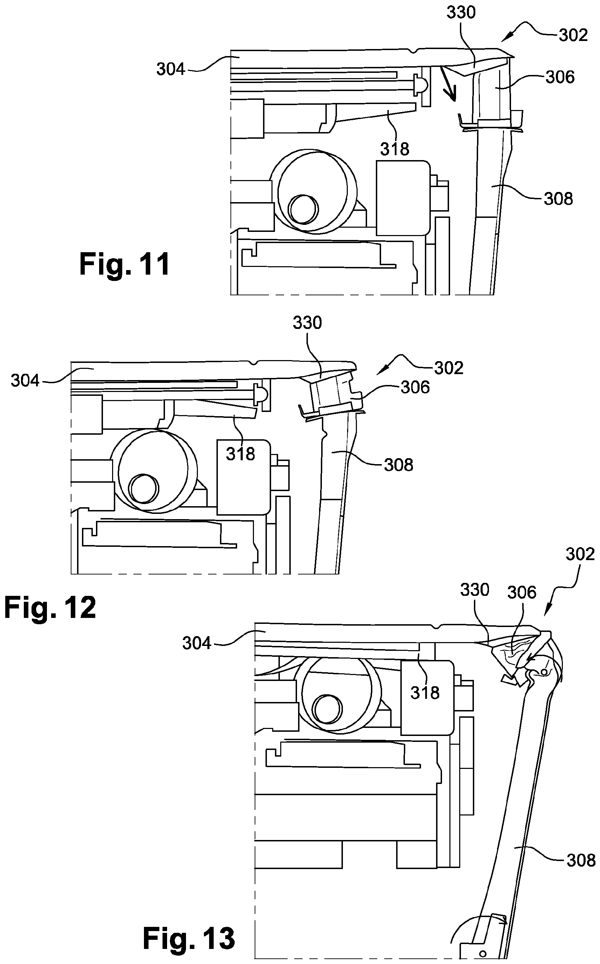

Les figures 11 à 13 illustrent différentes étapes de déformation d'un dispositif d'absorption selon la figure 9, ainsi que des brancards d'un véhicule comprenant un tel dispositif.

La figure 11 correspond à un premier stade de déformation et on peut observer que la poutre transversale 304 est déjà redressée. Grâce à l'entretoise 330, le pivotement de la portion d'extrémité de la poutre 304 a pour effet d'exercer un couple de flexion sur la tête du profilé déformable 306. A ce stade, le brancard 308 n'est pas encore déformé de manière notoire.

La figure 12 illustre un deuxième stade de déformation, faisant suite au premier stade de la figure 11. On peut observer que le couple de flexion transmis par le profilé déformable 306 au brancard 308 provoque la flexion de ce dernier à proximité de sa tête. L'effort de compression exercé sur le profilé déformable par la poutre génère un couple de flexion du brancard compte tenu de l'inclinaison du profilé déformable 306. Le groupe de refroidisseurs 318 est en contact avec l'échappement du bloc moteur.

La figure 13 illustre un troisième stade de déformation où le profilé 306 est fortement déformé en compression et où le brancard a subi un déplacement en rotation par rapport à un point pivot situé à l'arrière. Le groupe de refroidisseurs 318 est en contact avec le bloc moteur. L'inclinaison du brancard permet ainsi à la structure du véhicule de se déformer davantage dans le cas d'un choc frontal contre un mur fixe avec un recouvrement de 100%, et, partant, de limiter les décélérations subies par les occupants du véhicule.

Les figures 7 à 13 montrent des exemples de mode de réalisation du moyen de déformation contrôlée.

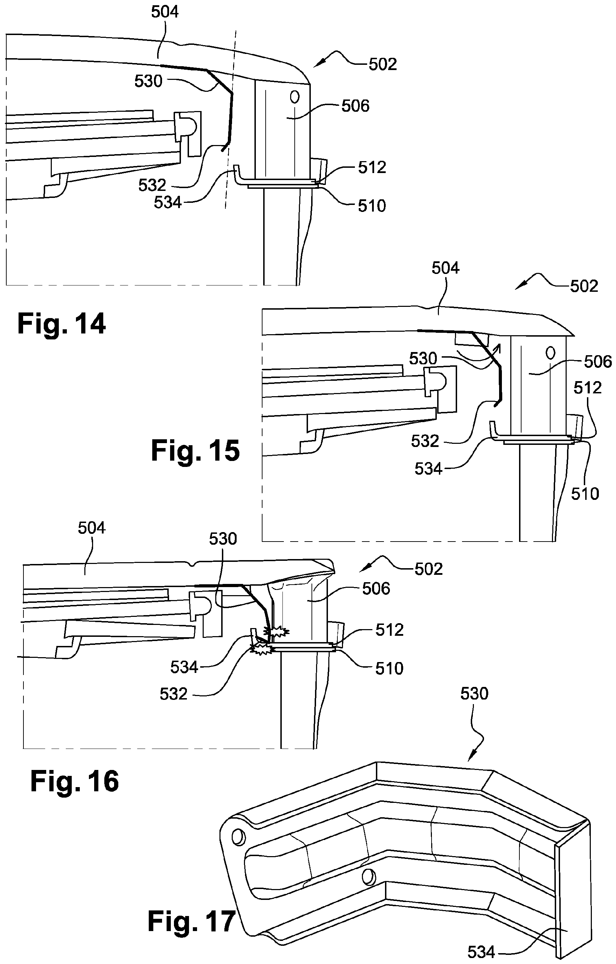

Les figures 14 à 16 illustrent un cinquième mode de réalisation conforme à l'invention. Les numéros de référence du premier mode sont utilisés dans ce cinquième mode pour les éléments identiques ou similaires, ces numéros étant toutefois majorés de 400, afin de bien distinguer les deux modes de réalisation. Des numéros spécifiques compris entre 500 et 600 sont utilisés pour les éléments spécifiques à ce mode de réalisation.

La figure 14 illustre le dispositif d'absorption de choc 502 avant déformation. Les moyens de déformation contrôlée comprennent un bras 530 fixé à la poutre transversale 504 et faisant saillie vers l'arrière depuis la face arrière de ladite poutre. Le bras 530 comprend à son extrémité libre une portion inclinée 532 apte à faire passer outre le gousset 534 de la bride de fixation 512 du profilé déformable 506 en cas de déformation dudit profilé en compression uniquement, c'est-à-dire notamment lors d'un choc frontal du type urbain à 16 km/h avec 40% de recouvrement contre un butoir rigide incliné à 10°.

La figure 15 illustre le dispositif de la figure 14 à un premier stade de déformation suite à un choc frontal avec un mur avec 100 de recouvrement. A ce stade, la poutre transversale 504 a commencé à se redresser. Par ce fait, le bras 530 a pivoté vers le profilé déformable 506 à un tel point que l'extrémité 532 du bras est maintenant en face de la bride 512 du profilé.

La figure 16 illustre le dispositif de la figure 15 à un deuxième stade de déformation. La poutre transversale 504 est maintenant quasi totalement redressée, à tel point que l'extrémité 532 du bras 530 s'est encore rapprochée du profilé 506. De plus, ledit profilé 506 a commencé à se déformer en compression, si bien que l'extrémité 534 du bras 530 est maintenant en contact avec la bride 512. Elle est ainsi emprisonnée entre le profilé et le gousset. Elle peut ainsi exercer un effort longitudinal de compression désaxé sur le brancard 508, apte à générer un couple de flexion de ce dernier. La suite du processus de déformation est similaire à celui des figures 12 et 13 discutées précédemment.

En fonction de la longueur du bras, le gousset 534 peut être découpé pour permettre le passage de l'extrémité 534 dudit bras lors de la déformation de la poutre transversale 504.

Le bras 530 est préférentiellement réalisé en tôle d'acier pliée comme illustré à la figure 17. Il peut comprendre une section en U avec des semelles destinées à le rigidifier. Il est préférentiellement fixé par vissage à la face arrière de la poutre.

De manière générale, les moyens de déformation contrôlée sont disposés exclusivement du côté droit. La raison est que le brancard droit est habituellement moins rigide que celui de gauche. En effet, dans les véhicules avec moteur transversal, la boîte de vitesse est habituellement disposée du côté gauche, dégageant ainsi davantage de place pour la section du brancard. Il peut donc être avantageux de prévoir les moyens de déformation décrits ci-avant de manière privilégiée sur le côté droit car ce dernier est moins rigide et donc plus facile à déformer en flexion.

## Revendications

1. Véhicule automobile comprenant une structure avec :
- deux profilés structurels (108; 208; 308; 408, 508) s'étendant longitudinalement généralement parallèlement l'un à l'autre ; et
- un dispositif d'absorption de chocs (102; 202; 302; 402; 502), comprenant :
∘ deux profilés déformables en compression (106 ; 206 ; 306 ; 406 ; 506), disposés parallèlement l'un à l'autre et destinés à être fixés dans le prolongement des deux profilés structurels longitudinaux (108 ; 208, 308, 408, 508) du véhicule, respectivement ;
∘ une poutre transversale (104 ; 204 ; 304 ; 404 ; 504) fixée aux extrémités avant des profilés déformables (106 ; 206 ; 306 ; 406 ; 506), la poutre présentant un profil généralement galbé vers l'avant ; et
∘ des moyens de déformation contrôlée (130, 230 ; 330 ; 430 ; 530) disposés sur la poutre transversale (104 ; 204 ; 304 ; 404 ; 504) et configurés pour agir sur au moins un des profilés déformables (106 ; 206 ; 306 ; 406 ; 506) lors d'une déformation en redressement de ladite poutre, de manière à exercer un couple de flexion sur le ou les profilés structurels,
**caractérisé en ce que** les moyens de déformation contrôlée (130 ; 230 ; 330 ; 430 ; 530) dudit dispositif d'absorption de chocs (102 ; 202 ; 302 ; 402 ; 502) sont disposés exclusivement du côté droit du véhicule et forment un bras (530) en saillie de la face arrière de la poutre transversale (504), configuré pour coopérer par engagement avec une platine de fixation (512) du ou des profilés déformables (506) au(x) profilé(s) structurel(s) (508) du véhicule lors de la déformation en redressement de ladite poutre (504), et pour passer outre ladite platine (512) lors d'une déformation en compression du profilé déformable correspondant (506) sans déformation en redressement de ladite poutre.

2. Véhicule selon la revendication 1, **caractérisé en ce que** l'extrémité libre du bras (530) présente une forme inclinée ou arrondie, apte à glisser le long de la platine de fixation du profilé déformable correspondant lors d'une déformation en compression du profilé déformable correspondant sans déformation en redressement de ladite poutre.

3. Véhicule selon l'une des revendications 1 et 2, **caractérisé en ce que** les moyens de déformation contrôlée (530) sont rapportés sur la face arrière, la face supérieure et/ou la face inférieure de la poutre transversale, préférentiellement par vissage et/ou soudage.

4. Véhicule selon l'une des revendications 1 à 3, **caractérisé en ce que** les moyens de déformation contrôlée (530) sont situés au niveau de la jonction entre la poutre transversale et le ou les profilés déformables.

## Patentansprüche

1. Kraftfahrzeug, das eine Struktur umfasst mit:
- zwei Strukturprofilen (108; 208; 308; 408, 508), die sich längs im Allgemeinen parallel zueinander erstrecken; und
- einer stoßdämpfenden Vorrichtung (102; 202; 302; 402; 502), die Folgendes umfasst:
∘ zwei in Kompression verformbare Profile (106; 206; 306; 406; 506), die parallel zueinander angeordnet und dazu bestimmt sind, jeweils in der Verlängerung der zwei länglichen Strukturprofile (108; 208; 308; 408, 508) des Fahrzeugs angeordnet zu sein;
∘ einen Querträger (104; 204; 304; 404; 504), der an den vorderen Enden der verformbaren Profile (106; 206; 306; 406; 506) befestigt ist, wobei der Träger ein im Allgemeinen nach vorn gewölbtes Profil aufweist; und
∘ Mittel zum kontrollierten Verformen (130, 230; 330; 430; 530), die auf dem Querträger (104; 204; 304; 404; 504) angeordnet und konfiguriert sind, um auf mindestens eines der verformbaren Profile (106; 206; 306; 406; 506) bei einer Gleichrichtverformung des Trägers derart zu wirken, dass ein Biegemoment auf das oder die Strukturprofile ausgeübt wird;
**dadurch gekennzeichnet, dass** die Mittel zur gesteuerten Verformung (130, 230; 330; 430; 530) der stoßdämpfenden Vorrichtung (102; 202; 302; 402; 502) ausschließlich auf der rechten Seite des Fahrzeugs angeordnet sind und einen Arm (530), der von der Rückseite des Querträgers (504) vorragt, bilden, der konfiguriert ist, um durch Eingreifen mit einer Befestigungsplatte (512) des oder der verformbaren Profil(s)e (506) an dem/den Strukturprofil(en) (508) des Fahrzeugs bei der Gleichrichtverformung des Trägers (504) zusammenzuwirken, um über die Platte (512) bei einer Verformung in Kompression des entsprechenden verformbaren Profils (506) ohne Gleichrichtverformung des Trägers hinauszugehen.

2. Fahrzeug nach Anspruch 1, **dadurch gekennzeichnet, dass** das freie Ende des Arms (530) eine geneigte oder gerundete Form aufweist, die geeignet ist, entlang der Befestigungsplatte des entsprechenden verformbaren Profils bei einer Verformung in Kompression des entsprechenden verformbaren Profils ohne Gleichrichtverformung des Trägers zu gleiten.

3. Fahrzeug nach einem der Ansprüche 1 und 2, **dadurch gekennzeichnet, dass** die Mittel zur gesteuerten Verformung (530) auf der hinteren Fläche, der oberen Fläche und/oder der unteren Fläche des Querträgers bevorzugt durch Schrauben und/oder Schweißen angebaut sind.

4. Fahrzeug nach einem der Ansprüche 1 bis 3, **dadurch gekennzeichnet, dass** die Mittel zur gesteuerten Verformung (530) im Bereich des Stoßes zwischen dem Querträger und den verformbaren Profilen liegen.

## Claims

1. A motor vehicle including a structure with:
- two structural profiled sections (108; 208; 308; 408; 508) extending longitudinally generally parallel to one another; and
- a shock absorbing device (102; 202; 302; 402; 502), including:
o two profiled sections which are deformable by compression (106; 206; 306; 406; 506), disposed parallel to one another and intended to be fixed in the extension of the two longitudinal structural profiled sections (108; 208, 308, 408, 508) of the vehicle, respectively;
∘ a transverse beam (104; 204; 304; 404; 504) fixed to the front ends of the deformable profiled sections (106; 206; 306; 406; 506), the beam having a profile that is generally curved towards the front; and
∘ means for controlled deformation (130, 230; 330; 430; 530) disposed on the transverse beam (104; 24; 304; 404; 504) and configured to act on at least one of the deformable profiled sections (106; 206; 306; 406; 506) during a straightening deformation of said beam, so as to exert a bending torque on the structural profiled section(s),
**characterized in that** the means for controlled deformation (130; 230; 330; 430; 530) of said shock absorbing device (102; 202; 302; 402; 502) are disposed exclusively on the right-hand side of the vehicle and form an arm (530) projecting from the rear face of the transverse beam (504), configured to cooperate by engagement with an attachment plate (512) of the deformable profiled section(s) (506) to the structural profiled section(s) (508) of the vehicle during the straightening deformation of said beam (504), and to override said plate (512) during a compression deformation of the corresponding deformable profiled section (506) without straightening deformation of said beam.

2. The vehicle according to Claim 1, **characterized in that** the free end of the arm (530) has an inclined or rounded shape, able to slide along the attachment plate of the corresponding deformable profiled section during a compression deformation of the corresponding deformable profiled section without straightening deformation of said beam.

3. The vehicle according to one of Claims 1 and 2, **characterized in that** the means (530) for controlled deformation are fixed on the rear face, the upper face and/or the lower face of the transverse beam, preferably by screwing and/or welding.

4. The vehicle according to one of Claims 1 to 3, **characterized in that** the means (530) for controlled deformation are situated at the level of the junction between the transverse beam and the deformable profiled section(s).
